# EUROPEAN PATENT SPECIFICATION

(11) **EP 4 205 896 B1**
(45) Date of publication and mention of the grant of the patent: **02.04.2025**
(21) Application number: 21881462.2
(22) Date of filing: 10.02.2021
(51) Int. Cl.: B23K 11/11, B23K 11/30

(54) **ELECTRIC RESISTANCE SPOT WELDING DEVICE AND METHOD**
VORRICHTUNG UND VERFAHREN ZUM ELEKTRISCHEN WIDERSTANDSPUNKTSCHWEISSEN
DISPOSITIF ET PROCÉDÉ DE SOUDAGE PAR POINTS PAR RÉSISTANCE ÉLECTRIQUE

(30) Priority: 22.10.2020 CN 202011140736
(43) Date of publication of application: 05.07.2023
(73) Proprietor: CRRC Qingdao Sifang Co., Ltd., Qingdao, Shandong 266111 (CN)
(72) Inventor: HAN, Xiaohui, Qingdao, Shandong 266111 (CN); XU, Ye, Qingdao, Shandong 266111 (CN); ZHANG, Zhiyi, Qingdao, Shandong 266111 (CN); YE, Jiehe, Qingdao, Shandong 266111 (CN); CAO, Jinshan, Qingdao, Shandong 266111 (CN)
(74) Representative: Winter, Brandl - Partnerschaft mbB
(86) International application number: PCT/CN2021/076530
(87) International publication number: WO 2022/083036

(56) References cited:
- CN-A- 101 543 933
- CN-A- 105 358 283
- CN-A- 112 317 935
- CN-U- 210 306 208
- JP-A- 2009 154 171
- JP-A- 2016 161 078
- JP-A- H0 999 378
- JP-A- H06 292 974
- US-A- 5 155 320
- US-A1- 2016 144 449

## Description

### FIELD

The present application relates to the field of welding, in particular to a device and a method for resistance spot welding, see claims 1 and 8.

### BACKGROUND

Resistance spot welding is a connection mode having stable welding quality, high production efficiency, and being prone to mechanization and automation. It is widely applied in automobiles, rail trains, electronics, household appliances and other manufacturing fields. Compared with common double-sided single-spot welding, single-sided double-spot welding is especially suitable for welding large slabs having large thickness ratio due to high production efficiency since two welding spots can be simultaneously welded. Since the single-sided double-spot welding is single-sided welding and suitable for only welding conditions that can be completed on a single side, it is widely applied in welding for rail train bodies. However, in an actual production process, a distal end and a proximal end of a nugget in welding spots generated using the single-sided double-spot welding have asymmetrical morphologies, that is, an end of the nugget proximal to two electrodes has large thickness, and an end of the nugget distal to the two electrodes is small thickness. As such, when load is applied to the nugget, the distal end of the nugget can withstand less pressure since it has smaller thickness. In order to make the distal end of the nugget having a smaller thickness meet mechanical performance conditions, more welding heat input is required, resulting in the thickness of the nugget at the proximal end is greatly beyond demand, and even causing welding spatter on the distal end of nugget, which affects welding quality. In addition, welding quality is further affected due to nugget shift and insufficient penetration rate at a side having thin thickness when tailor rolled blanks are welded since the single-sided double-spot welding is commonly applied in the welding of tailor rolled blanks.

JP H06 292974 A provides the package welding method and equipment therefor where a metallic cap is positioned with a high accuracy for a package main body and satisfactory spot welding can be performed. The tabular metallic cap 22 is welded to the package main body 10 where a seam ring 20 is provided on the peripheral end face of an opening to store an element. The metallic cap 22 is mounted on the package main body 10, a couple of electrodes 66 and 68 separated by the specified distance are lowered and the periphery of the metallic cap 22 is held by the tip surfaces 66a and 68a of the couple of electrodes 66 and 68 which are inclined so that the insides become higher, by which positioning is performed, the couple of electrodes 66 and 68 are energized and the periphery of the metallic cap 22 is subjected to spot welding to the seam ring 20 of the package main body 10 at the position with which the tip surface thereof comes into contact.

US5 155 320 A relates to a non-redressing welding nose design. A welding nose has a digital end and a root portion joined by a plurality of surface segments having a progressively increasing outside diameter for distributing welding loads in a radial direction and for forming a plurality of smooth surfaces joined at intersections to define preformed depressions for flow of metal grains from the base material of the welding nose for reducing formation of wings on the outermost diameter of the welding nose thereby to reduce sub-surface fracturing so as to maintain a desired mean diameter over extended periods of use.

US 2016/144449 A1 (describing the preamble of claim 1) relates to indirect spot welding method. This indirect spot welding is for welding members including at least two overlapping steel sheets that have a ferrite phase as a main phase by holding a welding electrode against a steel sheet from one side while applying pressure with the electrode, attaching a feeding point to a steel sheet at the other side at a location remote from the electrode, and allowing current to flow between the electrode and the feeding point. This welding includes contacting magnetic rigid bodies to a peripheral area of the electrode from the one side against which the electrode is held and securing an overlapping region in the peripheral area of the electrode by a magnetic force produced by the rigid bodies, thereby obtaining a weld having fully satisfactory strength, regardless of the rigidity of the members.

### SUMMARY

The present invention provides a device for resistance spot welding capable of improving nugget quality, which may solve the problem that the nugget quality is affected due to asymmetrical morphologies of a distal end and a proximal end of a nugget.

The present invention further provides a method for resistance spot welding capable of improving nugget quality.

A device for resistance spot welding according to a first aspect of the present invention is defined in claim 1, and includes a pair of electrodes located on the same welding surface of a to-be-welded assembly, where the to-be-welded assembly is provided with a symmetry axis, the pair of electrodes are symmetrically arranged on two sides of the symmetry axis, an end of each electrode is provided with a special-shaped contact surface, and each special-shaped contact surface is biased toward a direction departing the symmetry axis relative to an electrode axis; where the special-shaped contact surface is used for making a current density centerline generated by the pair of electrodes bias toward a direction departing the symmetry axis relative to the electrode axis, and/or for making a current density of each electrode deflect in a tendency away from the welding surface within the to-be-welded assembly. The device of the present application can change the current density state of the electrode in the to-be-welded assembly, to appropriately enhance the heat input of an end of the nugget distal to the symmetry axis, and appropriately weak the heat input of an end of the nugget proximal to the symmetry axis, so as to make the morphology of the nugget at distal end and proximal end relative to the symmetry axis symmetrical and uniform, and make the morphology and stress state of the nugget meet the mechanical performance requirements under load, thus improving welding quality.

Further embodiments of the first aspect of the present invention are defined in the dependent claims.

A method for resistance spot welding according to a second aspect of the present invention is defined in claim 8, and is performed by the device for resistance spot welding. The method for resistance spot welding includes: driving a pair of electrodes to travel in parallel along a symmetry axis of a to-be-welded assembly on a welding surface of the to-be-welded assembly, to make the pair of electrodes act on the to-be-welded assembly synchronously, and generate a nugget corresponding to a special-shaped contact surface of each electrode of the pair of electrodes in the to-be-welded assembly, where a pair of nuggets are provided symmetrically relative to the symmetry axis, and/or, for each nugget, the nugget cross-sectional area in a lower welding plate of the to-be-welded assembly is larger than the nugget cross-sectional area in an upper welding plate of the to-be-welded assembly. The method for resistance spot welding is performed by the device for resistance spot welding, and the method for resistance spot welding has all the advantages of the device for resistance spot welding, which are not repeated here.

Additional aspects and advantages of the present invention are set forth, and in part, from the following description, the part would become clear from the following description, or be learned by practice of the present disclosure,

### BRIEF DESCRIPTION OF THE DRAWINGS

In order to more clearly illustrate the solutions disclosed in the embodiments of the present invention, the drawings used in the descriptions of the embodiments or the related art are briefly described below. The drawings in the following description are only of certain embodiments of the present application, and other drawings may be obtained according to these drawings without any creative efforts for those skilled in the art.
FIG. 1 is a schematic diagram showing a welding principle of a device for resistance spot welding;
FIG. 2 is a schematic diagram showing a welding principle of an electrode tip;
FIG. 3 is a top view of a first structure of an electrode tip;
FIG. 4 is a cross-sectional view of the first structure of an electrode tip;
FIG. 5 is a bottom view of the first structure of an electrode tip;
FIG. 6 is a cross-sectional view of a second structure of an electrode tip;
FIG. 7 is a bottom view of the second structure of an electrode tip;
FIG. 8 is a cross-sectional view of a third structure of an electrode tip;
FIG. 9 is a bottom view of the third structure of an electrode tip;
FIG. 10 is a schematic diagram of a current density of a contrast electrode tip;
FIG. 11 is a schematic diagram of a structure of a nugget of a contrast electrode tip;
FIG. 12 is a schematic diagram of a current density of a first structure of an electrode tip;
FIG. 13 is a schematic diagram of a nugget structure of the first structure of an electrode tip;
FIG. 14 is a schematic diagram of a current density of a second structure of an electrode tip;
FIG. 15 is a schematic diagram of a nugget structure of the second structure of an electrode tip;
FIG. 16 is a front view of an electrode rod according to an embodiment of the present application; and
FIG. 17 is a bottom view of the electrode rod.

### Reference numerals:

1: electrode rod; 11: electrode axis; 12: rod body; 13: connecting part; 14: positioning boss; 15: sliding block;
2: electrode tip; 20: special-shaped contact surface; 201: first contact surface; 202: second contact surface; 21: current density centerline; 22: sliding groove; 23: positioning groove; 24: fitting hole; 25: guiding part;
2': contrast electrode tip; 11': axis of the contrast electrode tip; 7': nugget;
3: bottom plate; 41: upper welding plate; 42: lower welding plate; 5: spacer plate; 6: symmetry axis; 7: nugget.

### DETAILED DESCRIPTION

The implementation of the present invention is further described in detail below in combination with the accompanying drawings and embodiments. The following embodiments are used for describing the present invention, but cannot be used for limiting the scope of the present invention,

It should be noted that, the orientation or positional relations specified by terms such as "central", "longitudinal", "transverse", "upper", "lower", "front", "rear", "left", "right", "vertical", "horizontal", "top", "bottom", "inner", "outer" and the like, are based on the orientation or positional relations shown in the drawings, which are merely for convenience of description of the present application and to simplify description, but do not indicate or imply that the stated devices or members must have the particular orientation and be constructed and operated in a particular orientation, and thus these can not to be construed as limiting the present application. Furthermore, the terms "first", "second", "third" and the like are only used for descriptive purposes and should not be construed as indicating or implying a relative importance.

It should be further noted that unless explicitly specified and defined otherwise, the terms "connected to" and "connected" shall be understood broadly, for example, it may be either fixedly connected or detachably connected, or can be integrated; it may be either mechanically connected, or electrically connected; and it may be either directly connected, or indirectly connected through an intermediate medium. The specific meanings of the terms above in the present application can be understood by those skilled in the art in accordance with specific conditions.

Unless otherwise expressly specified and defined, a first feature is "on" or "under" a second feature can refer to that the first feature is directly contacted with the second feature, or the first feature is indirectly contacted with the second feature through an intermediate medium. And further, the first feature is "on", "above" and "over" the second feature can refer to that the first feature is directly above or obliquely above the second feature, or simply refer to that the stage height of the first feature is higher than that of the second feature. The first feature is "under", "below" or "beneath" the second feature can refer to that the first feature is directly below or obliquely below the second feature, or simply refer to that the stage height of the first feature is lower than that of the second feature.

In the description of this specification, description with reference to the terms "one embodiment", "some embodiments", "an example", "specific example", "some examples" and the like, refers to that specific features, structures, materials or characteristics described in combination with an embodiment or an example are included in at least one embodiment or example according to the embodiments of the present application. In the present specification, schematic representations of the above terms are not necessarily directed to a same embodiment or example. Furthermore, the particular features, structures, materials or characteristics described can be combined in any suitable manner in any one or more embodiments or examples. In addition, those skilled in the art may combine the different embodiments or examples, as well as the features of the different embodiments or examples described in this specification, without conflicting each other.

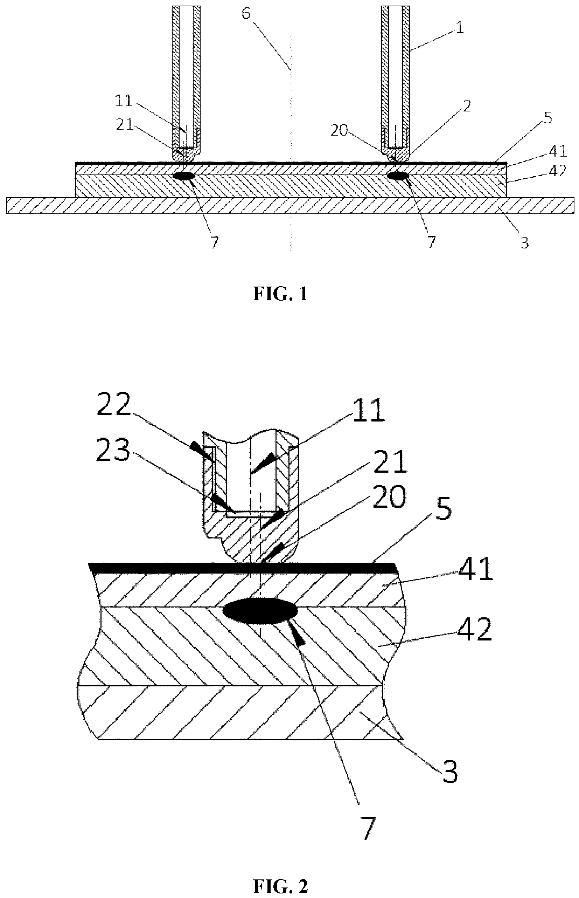

As shown in FIG. 1 to FIG. 17, an embodiment provides a device for resistance spot welding, and provides a method for resistance spot welding based on the device for resistance spot welding.

As shown in FIG. 1 and FIG. 2, the device for resistance spot welding includes a pair of electrodes capable of travelling in parallel and simultaneously welding a welding surface of a to-be-welded assembly. The pair of electrodes are located on the same welding surface of the to-be-welded assembly, and can travel in parallel along the same welding direction for synchronous welding. Currents generated in a welding assembly under the action of the pair of electrodes can interact with each other, and a pair of nuggets 7 can be generated in the welding assembly by the pair of electrodes, and then single-sided double-resistance-spot welding process is applied to the to-be-welded assembly.

The to-be-welded assembly has a symmetry axis 6, the pair of electrodes are symmetrically arranged on two sides of the symmetry axis 6, an end of each electrode is provided with a special-shaped contact surface 20, and each special-shaped contact surface 20 is shifted in a direction away from the symmetry axis 6 relative to an electrode axis 11. The special-shaped contact surface 20 is used for shifting a current density centerline 21 generated by a corresponding electrode in a direction away from the symmetry axis 6 relative to the electrode axis 11, and/or for deflecting a current density of each electrode in a direction away from the welding surface within the to-be-welded assembly. The device for resistance spot welding can change a current density state of the electrode in the to-be-welded assembly by a structure arrangement of the special-shaped contact surfaces 20 of the pair of electrodes, to appropriately enhance the heat input at an end of the nugget 7 distal to the symmetry axis 6 (that is, a distal end of the nugget 7), and appropriately weak the heat input at an end of the nugget 7 proximal to the symmetry axis 6 (that is, a proximal end of the nugget 7), both distal end and proximal end of the nugget 7 relative to the symmetry axis 6 have symmetrical and uniform morphologies, and the morphologies and stress state of the nugget 7 meets the mechanical performance requirements when a load is applied, thereby improving welding quality.

The symmetry axis 6 is a perpendicular line through a midpoint of a line connecting two electrode axes 11 of the pair of electrodes, that is, it is ensured to arrange symmetrically the pair of electrodes relative to the symmetry axis 6.

For further improving the welding quality of single-sided double-spot welding, the device for resistance spot welding further includes a bottom plate 3 and a spacer plate 5. The to-be-welded assembly includes an upper welding plate 41 and a lower welding plate 42, and the upper welding plate 41 and the lower welding plate 42 are laid between the spacer plate 5 and the bottom plate 3. A surface of the spacer plate 5 backing toward the upper welding plate 41 is the welding surface. The bottom plate 3 is used for providing support and leveling for the to-be-welded assembly. The spacer plate 5 is preferable a metal plate. By additionally arranging the spacer plate 5 on a surface of the thinner upper welding plate 41, on the one hand, a resistance of the spacer plate 5 and a contact resistance between the spacer plate 5 and the upper welding plate 41 can be used to increase heat production in a spot welding process and promote formation and growth of the nugget 7; and on the other hand, the electrode and the welding assembly can be separated to reduce the conduction of heat from a welding center area to the special-shaped contact surface 20, and reduce heat dissipation on a side of the welding surface of the upper welding plate 41.

The thickness of the upper welding plate 41 is smaller than the thickness of the lower welding plate 42 and the upper welding plate 41 and lower welding plate 42 welded together can form a tailor rolled blank.

After the current density of each electrode is deflected in a direction away from the welding surface within the to-be-welded assembly, a cross-sectional area of a part of the nugget 7 formed at the lower welding plate 42 of the to-be-welded assembly is larger than a cross-sectional area of a part of the nugget 7 formed at the upper welding plated 41 of the to-be-welded assembly, which can avoid a shifting of the nugget 7 and improve the side penetration rate of the thinner upper welding plate 41, thereby further improving welding quality.

During a single-sided double-point welding process of the tailor rolled blank using the device for resistance spot welding, the quality of the nugget 7 of a welding spot can be improved and the problem that the nugget 7 is shifted to a thicker side of the to-be-welded assembly can be solved. By a structure arrangement of the special-shaped contact surfaces 20 at end surfaces of electrodes, an original rule of larger current density at the proximal end of the nugget 7 and small current density at the distal end of the nugget 7 is changed to a rule of even distribution of current at the distal end and the proximal end of the nugget 7, thereby alleviating or eliminating a phenomenon of an asymmetric nugget 7 caused by concentrated current distribution near an inner side of the end surface of the electrode inside the to-be-welded assembly during single-sided double-spot welding, thereby improving qualities of the welding spot and reducing welding energy consumption.

As shown in FIG. 2, FIG. 3, FIG. 16 and FIG. 17, each electrode includes an electrode tip 2 and an electrode rod 1. An end of the electrode tip 2 is detachably sleeved on an end of the electrode rod 1, and the electrode tip 2 can be disassembled at any time as required to replace a suitable electrode tip 2, thereby improving the flexibility of welding operation. Another end of the electrode tip 2 is provided with a boss, and an end surface of the boss is provided with the special-shaped contact surface 20. Preferably, a side of the boss proximal to the symmetry axis 6 is provided with a guiding part 25, and the guiding part 25 is connected between the special-shaped contact surface 20 and an outer wall of the electrode tip 2. The guiding part 25 is inclined relative to the electrode axis 11, and is used for guiding a current density centerline 21 to skew or incline toward a side distal to the symmetry axis 6 relative to the electrode axis 11. By the guiding part 25, the special-shaped contact surface 20 is arranged on a side of an end surface of the electrode tip 2 away from the symmetry axis 6, the current is deflected and guided by the guiding part 25 during passing through the electrode tip 2, and the current density centerlines 21 of all currents are shifted toward a side away from the symmetry axis 6 relative to an axis of the electrode tip 2 (that is, the electrode axis 11), or the current is deflected and inclined inside the electrode tip 2, and thus the position where the current enters the to-be-welded assembly from the special-shaped contact surface 20 is shifted toward a side away from the symmetry axis 6 relative to a projected position of the electrode axis 11 on the to-be-welded assembly. By the above structure, the current distribution has a property of the current being more outside and less inside, and balances the current distribution being sparse outside and dense inside caused by the current deflection during single-sided double-spot welding, the contact surface between the upper welding plate 41 and the lower welding plates 42 of the welding assembly has a uniform current density, and the nugget 7 having a symmetrical structure is formed under the condition of uniform current density, and welding quality is improved.

The guiding part 25 is preferably a stepped structure and/or an arc-shaped smooth transition surface structure.

In order to flexibly assemble and disassemble the electrode tip 2 and the electrode rod 1, an end of the electrode tip 2 is provided with an axially disposed fitting hole 24, and an end of the electrode rod 1 is provided with a connecting part coaxially inserted into the fitting hole 24. In order to circumferentially position the electrode tip 2 and the electrode rod 1, a side wall of the fitting hole 24 is provided with a sliding groove 22, a side wall of the connecting part 13 is provided with a sliding block 15 slidably fitted in the sliding groove 22, and the sliding groove 22 and the sliding block 15 are provided along the electrode axis 11. In order to radially and centrally position the electrode tip 2 and the electrode rod 1, an end face of the fitting hole 24 is provided with a positioning groove 23, and an end of the connecting part 13 is provided with a positioning boss 14 coaxially fitted in the positioning groove 23; and another end of the connecting part 13 is connected with a rod body 12.

The rod body 12 of the electrode rod 1 is provided with a through hole along the electrode axis 11, and auxiliary mechanisms such as circuit elements and wires in the electrode tip 2 can be led through the through hole of the rod body 12, to avoid interference with the welding process.

In some embodiments, in order to reliably control the distribution of current density, the special-shaped contact surface 20 includes a first contact surface 201, and a geometric center of the first contact surface 201 is located on a side of the electrode axis 11 distal to the symmetry axis 6. During the process of the current flowing from the electrode tip 2 and passing through the first contact surface 201 into the to-be-welded assembly with the spacer plate 5, the shifting arrangement of the first contact surface 201 can guide the current to shift in a direction away from the symmetry axis 6, to change an incident angle of the current, when entering the to-be-welded assembly, the current is prone to being deflected in a direction away from the symmetry axis 6, to balance the current density being sparse outside and dense inside caused by the current deflection near the symmetry axis 6 during single-sided double-spot welding. Therefore, the current density is uniformed, and effect of current deflection of single-sided double-spot welding on the nugget 7 is alleviated or eliminated.

In some embodiments, the special-shaped contact surface 20 further includes a second contact surface 202, the second contact surface 202 is connected to a side of the first contact surface 201 proximal to the symmetry axis 6, and the area of the first contact surface 201 is larger than the area of the second contact surface 202. By increasing the area of the first contact surface 201 and decreasing the area of the second contact surface 202, the current distribution has a property of the current being more outside and less inside , and balances the current distribution being sparse outside and dense inside caused by the current deflection during single-sided double-spot welding, the contact surface between the upper welding plate 41 and the lower welding plates 42 has a uniform current density, and a nugget 7 having distal end and the proximal end with a symmetrical structure is formed under the condition of uniform current density..

In some embodiments, the above first contact surface 201 and the second contact surface 202 can be combined, and the first contact surface 201 and the second contact surface 202 are respectively arranged on two sides of the electrode axis 11, where the first contact surface 201 is located on a side distal to the symmetry axis 6, and the second contact surface 202 is located on a side proximal to the symmetry axis 6. Therefore, when entering the to-be-welded assembly, the current is prone to be deflected in a direction away from the symmetry axis 6, and the contact surface between the upper welding plate 41 and the lower welding plates 42 of the welding assembly has a uniform current density, which further ensures symmetry and uniform structure of the nugget 7.

The first contact surface 201 and the second contact surface 202 may be circular planes, elliptical planes, polygonal planes or planes with zigzag contour lines.

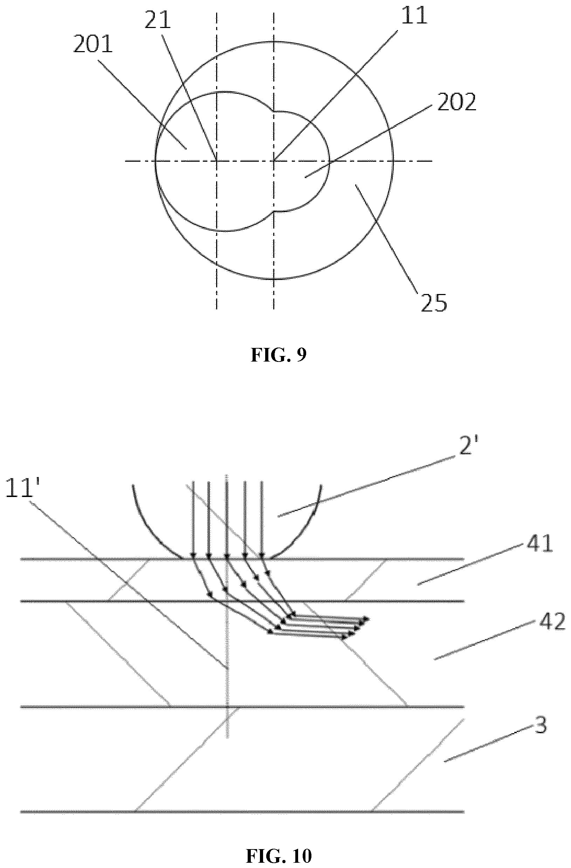

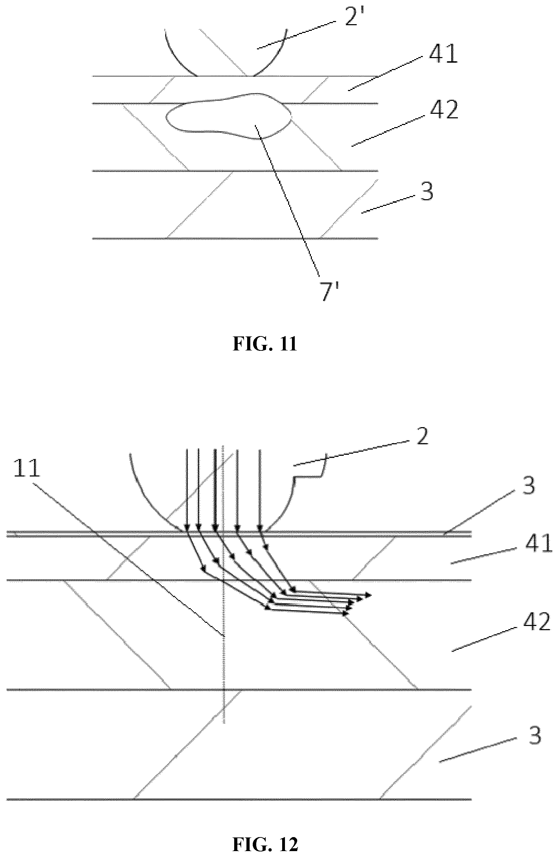

FIG. 10 and FIG. 11 show a schematic diagram of current density and a schematic diagram of a structure of the nugget 7 of a contrast electrode tip 2' for comparing with the electrode tip 2 described in the embodiments described above. In the contrast electrode tip 2', when vertically incident current flows to a proximal end of the pair of electrodes, the current is relatively deflected due to the interaction of the pair of electrodes. Since the contrast electrode tip 2' is provided with no special-shaped contact surface 20, and no spacer plate 5 is laid between the to-be-welded assembly and the contrast electrode tip 2', the current density centerline generated by the contrast electrode tip 2' coincides with an axis of the contrast electrode tip 11', and the current density generated by the electrode at a contact surface of the upper welding plate 41 and the lower welding plate 42 of the welding assembly has uneven distribution. As shown in FIG. 10, that is, there is a rule of larger current density at a proximal end of a pair of contrast electrode tips 2' and smaller current density at a distal end of the pair of contrast electrode tips 2', which leads to unbalanced heat generation inside the plate under a single electrode, that is, more heat is generated at the proximal end of the contrast electrode tip 2', and less heat is generated at the distal end of the contrast electrode tip 2'. Two nuggets 7' generated by final welding are both asymmetric structures, as shown in FIG. 11.

By changing the current density distribution at the proximal end and distal end of the pair of electrode tips 2 during single-sided double-spot welding process, the structure of the electrode tip 2 described in the embodiments described above can alleviate or eliminate effects of current deflection inside the plate under the electrodes on the nugget 7 during single-sided double-spot welding, thereby alleviating or eliminating the asymmetric structure of the nugget 7 during single-sided double-spot welding. While the quality of welding spots is ensured, welding energy consumption is decreased, and cost reduction and efficiency increase of single-sided double-spot welding process is realized.

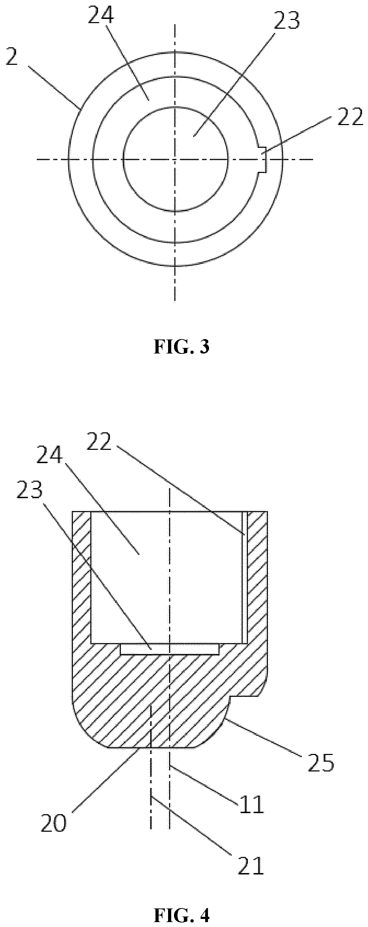

FIG. 3, FIG. 4 and FIG. 5 show the structure of a first type of electrode tip 2. The special-shaped contact surface 20 of the first type of electrode tip 2 includes a first contact surface 201 and a second contact surface 202, and both the first contact surface 201 and the second contact surface 202 are semicircular planes and are provided on two sides of the electrode axis 11, respectively. That is, the centers of the first contact surface 201 and the second contact surface 202 coincide, and the radius of the first contact surface 201 is larger than the radius of the second contact surface 202, the area of the first contact surface 201 is larger than the area of the second contact surface 202. In this structure of the electrode tip 2, an outer wall of the boss between an outer contour of the second contact surface 202 and an outer wall of the electrode tip 2 is provided to be a guiding part 25 with a stepped structure and an arc-shaped smooth transition surface structure. Moreover, an arc-shaped smooth transition surface structure is provided between an outer contour of the first contact surface 201 and the outer wall of the electrode tip 2.

The first type of electrode tip 2 is preferably suitable for a to-be-welded assembly consisting of an upper welding plate 41 with a thickness of 0.8 mm and a lower welding plate 42 with a thickness of 2 mm, and the thickness of a metal spacer plate 5 is 0.1 mm. The radius of the first contact surface 201 is 8 mm, and the radius of the second contact surface 202 is 5.5 mm. The guiding part 25 is a stepped structure formed by removing 1 mm from the outer wall of the electrode tip 2 inward, and then connected to the outer contour of the second contact surface 202 through an arc-shaped smooth transition surface structure. The length of the electrode tip 2 is 13 mm, and the fitting hole 24 in the electrode tip 2 has a diameter of 12 mm and a length of 12 mm. A side wall of the fitting hole 24 is provided with a sliding groove 22 having a width of 2 mm and a length of 12 mm, and the shortest distance between the sliding groove 22 and the special-shaped contact surface 20 is 6.5 mm. A blind end of the fitting hole 24 is provided with a positioning groove 23 having a diameter of 8 mm and a length of 1 mm.

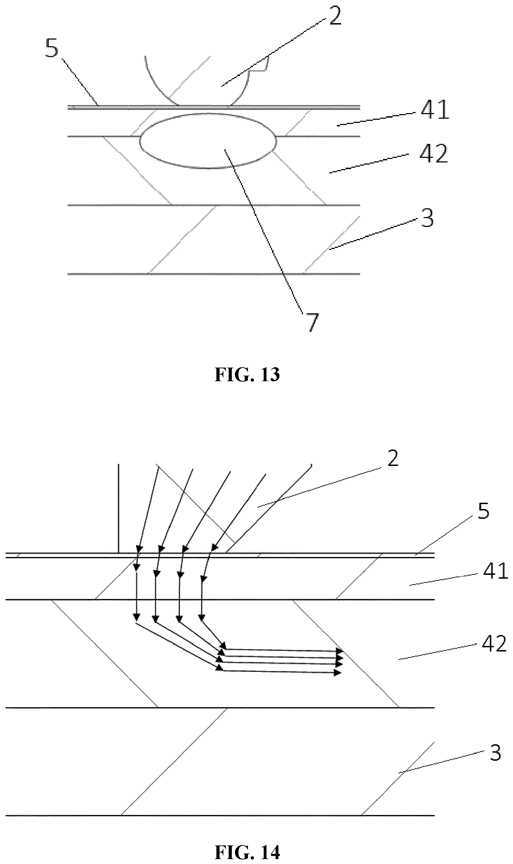

FIG. 12 and FIG. 13 show a schematic diagram of the current density of the first type of electrode tip 2 and a schematic diagram of the structure of the nugget 7. The electrode tip 2 described in the embodiments can shift a current density centerline 21 in a direction away from the symmetry axis 6 relative to the electrode axis 11. Therefore, when entering the to-be-welded assembly, the current is prone to be deflected in a direction away from the symmetry axis 6, the position of the contact surface between the upper welding plate 41 and the lower welding plates 42 has a uniform current density, which further ensures symmetry and uniform structure of the nugget 7.

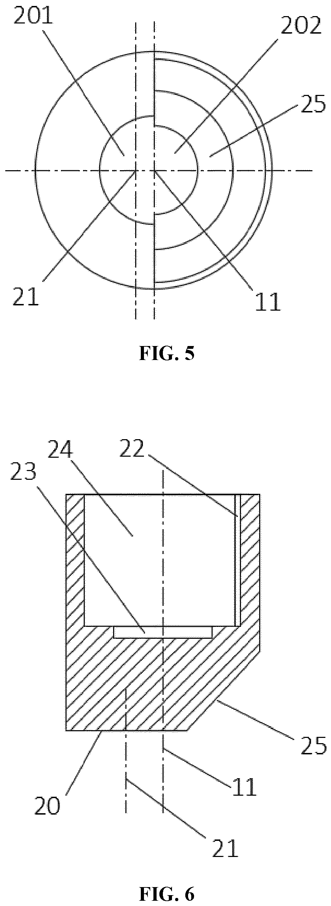

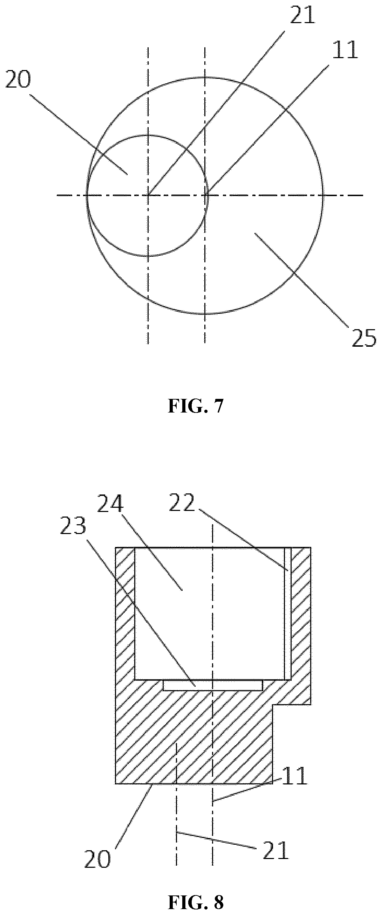

FIG. 6 and FIG. 7 show the structure of a second type of electrode tip 2. The special-shaped contact surface 20 of the second type of electrode tip 2 has a first contact surface 201. The first contact surface 201 is a circular plane, and the center of the first contact surface 201 is located on a side of the electrode axis 11 away from the symmetry axis 6. In this structure of the second type of electrode tip 2, an outer wall of the boss between an outer contour of the first contact surface 201 proximal to the symmetry axis 6 and an outer wall of the electrode tip 2 is provided to be a guiding part 25 with an arc-shaped smooth transition surface structure.

In the second type of electrode tip 2, the radius of the first contact surface 201 is 5 mm to 10 mm, and the distance between the center of the first contact surface 201 and the electrode axis 11 is 3 mm to 4 mm. The guiding part 25 is an arc-shaped smooth transition surface structure with an inclination angle of 35° to 45° from the outer wall of the electrode tip 2 and is connected with the outer contour of a side of the first contact surface 201 toward the symmetry axis 6. The sizes of the remaining structures of the second type of electrode tip 2 are the same as those of the first type of electrode tip 2.

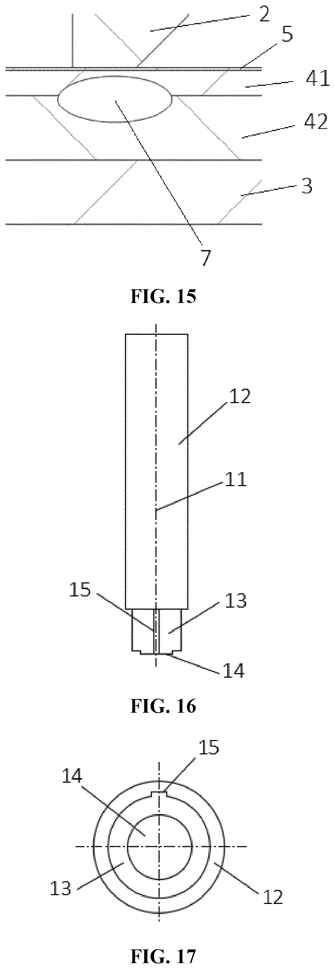

FIG. 14 and FIG. 15 show a schematic diagram of the current density of the electrode tip 2 and a schematic diagram of the structure of the nugget 7. The electrode tip 2 described in the embodiments can shift a current density centerline 21 in a direction away from the symmetry axis 6 relative to the electrode axis 11. Therefore, when entering the to-be-welded assembly, the current is prone to being deflected in a direction away from the symmetry axis 6, and the position of the contact surface between the upper welding plate 41 and the lower welding plates 42 of the welding assembly has a uniform current density, which further ensures symmetry and uniform structure of the nugget 7.

FIG. 8 and FIG. 9 show the structure of a third type of electrode tip 2. The special-shaped contact surface 20 of the third type of electrode tip 2 includes a first contact surface 201 and a second contact surface 202, the first contact surface 201 and the second contact surface 202 are streamlined planes whose outer contour is formed by connecting two circular portions. The center of the first contact surface 201 is located on a side of the electrode axis 11 distal to the symmetry axis 6, and the center of the second contact surface 202 is located on the electrode axis 11. In this structure of the electrode tip 2, an outer wall of the boss between an outer contour of the first contact surface 201 proximal to the symmetry axis 6 and an outer wall of the electrode tip 2 is provided to be a guiding part 25 with a stepped structure.

In the third type of electrode tip 2, the radius of the first contact surface 201 is 5 mm, the radius of the second contact surface 202 is 4 mm, and the distance between the center of the first contact surface 201 and the center of the second contact surface 202 is 3 mm. The length of the boss is 9 mm. The sizes of the remaining structures of the third type of electrode tip 2 are the same as those of the first type of electrode tip 2.

When the any type of electrode tip 2 is used: firstly, the to-be-welded assemblies are placed on a copper bottom plate 3, and a metal gasket is covered on the upper welding plate 41 of the to-be-welded assembly; the positioning groove 23 inside the electrode tip 2 is then aligned and socketed with the positioning boss 14 at an end of the connecting part 13 of the electrode rod 1, and the contact surface with a larger area in the special-shaped contact surfaces 20 of each electrode tip 2 is located on a side distal to the symmetry axis 6; a pair of electrode tips 2 are driven subsequently to apply a constant electrode force through the spacer plate 5 to ensure the stability of the conductive path; a pair of electrode tips 2 are used to then apply current to the to-be-welded assembly and to heat up the inside of the to-be-welded assembly to form the nugget 7; and the pressure is maintained for a period of time after the power is turned off to cool the welding spots, and the single-sided double-spot welding process is completed.

A method for resistance spot welding according to the embodiments of the present application is performed by the device for resistance spot welding. The method for resistance spot welding includes:
driving a pair of electrodes to travel in parallel along a symmetry axis of a to-be-welded assembly on a welding surface of the to-be-welded assembly, to make the pair of electrodes act on the to-be-welded assembly synchronously, and generate nuggets 7 corresponding to the special-shaped contact surfaces 20 of the pair of electrodes in the to-be-welded assembly;
where a pair of nuggets 7 are provided symmetrically relative to the symmetry axis 6, and/or, for each nugget 7, a nugget cross-sectional area in a lower welding plate 42 of the to-be-welded assembly is larger than the nugget cross-sectional area in an upper welding plate 41 of the to-be-welded assembly.

Since the method for resistance spot welding is performed by the device for resistance spot welding, the method for resistance spot welding has all the advantages of the above device for resistance spot welding, which are not repeated here.

It should be noted that, according to the welding process parameters and the requirements of the mechanical properties required by the nugget 7, electrode tips 2 of a pair of electrodes are replaced synchronously, to weld the to-be-welded assembly by using the electrode tips 2 with the most suitable structure of the special-shaped contact surface 20, so as to provide the optimal welding effect of single-sided double-spot welding.

## Claims

1. A device for resistance spot welding, comprising a pair of electrodes located on a same welding surface of a to-be-welded assembly,
the to-be-welded assembly has a symmetry axis (6), the pair of electrodes are symmetrically arranged on two sides of the symmetry axis (6), an end of each electrode is provided with a special-shaped contact surface (20), and each special-shaped contact surface (20) is shifted in a direction away from the symmetry axis (6) relative to an electrode axis (11);
wherein the electrode includes an electrode tip (2) and an electrode rod (1), an end of the electrode tip (2) is detachably sleeved on an end of the electrode rod (1), another end of the electrode tip (1) is provided with a boss, and an end surface of the boss is provided with the special-shaped contact surface (20);
**characterized in that**:
the special-shaped contact surface (20) is used for shifting a current density centerline (21) generated by the pair of electrodes in a direction away from the symmetry axis (6) relative to the electrode axis (11), and/or for deflecting a current density of each electrode in a direction away from the welding surface within the to-be-welded assembly;
the special-shaped contact surface (20) comprises a first contact surface (201), and a second contact surface (202), wherein a geometric center of the first contact surface (201) is located on a side of the electrode axis (11) distal to the symmetry axis (6), the second contact surface (202) is connected to a side of the first contact surface (201) proximal to the symmetry axis (6), and an area of the first contact surface (201) is larger than an area of the second contact surface (202).

2. The device of claim 1, wherein the first contact surface (201) and the second contact surface (202) are respectively arranged on two sides of the electrode axis (11), the first contact surface (201) is located on a side distal to the symmetry axis (6), and the second contact surface (202) is located on a side proximal to the symmetry axis (11).

3. The device of claim 1, wherein a guiding part (25) is arranged on a side of the boss proximal to the symmetry axis (11), and the guiding part (25) is connected between the special-shaped contact surface (20) and an outer wall of the electrode tip (2); and the guiding part (25) is inclined relative to the electrode axis (11), and is used for guiding the current density centerline (21) to skew or incline to a side distal to the symmetry axis (6) relative to the electrode axis (11).

4. The device of claim 1, wherein an end of the electrode tip (2) is provided with a fitting hole (24) arranged axially, and an end of the electrode rod (1) is provided with a connecting part (13) coaxially inserted into the fitting hole (24).

5. The device of claim 4, wherein a side wall of the fitting hole (24) is provided with a sliding groove (22), a side wall of the connecting part (13) is provided with a sliding block (15) slidably fitted in the sliding groove (22), and the sliding groove (22) and the sliding block (15) are both provided along the electrode axis (11).

6. The device of claim 4, wherein an end surface of the fitting hole (24) is provided with a positioning groove (23), and an end of the connecting part (13) is provided with a positioning boss (14) coaxially fitted in the positioning groove (23); and another end of the connecting part (13) is connected with a rod body (12).

7. The device of any one of claims 1 to 6, further comprising a bottom plate (3) and a spacer plate (5), the to-be-welded assembly includes an upper welding plate (41) and a lower welding plate (42), and the upper welding plate (41) and the lower welding plate (42) are laid between the spacer plate (5) and the bottom plate (3); and a surface of the spacer plate (5) backing toward the upper welding plate (41) is the welding surface.

8. A method for resistance spot welding, the method being **characterised by**:
performing the resistance spot welding with the device for resistance spot welding of any one of claims 1 to 7, and comprising:
driving the pair of electrodes to travel in parallel along a symmetry axis (6) of a to-be-welded assembly on a welding surface of the to-be-welded assembly, to make the pair of electrodes act on the to-be-welded assembly synchronously, and generate nuggets (7) corresponding to special-shaped contact surfaces (20) of the pair of electrodes in the to-be-welded assembly;
wherein a pair of nuggets (7) are provided symmetrically relative to the symmetry axis (6), and/or, for each nugget (7), a nugget cross-sectional area in a lower welding plate (42) of the to-be-welded assembly is larger than the nugget cross-sectional area in an upper welding plate (41) of the to-be-welded assembly.

## Patentansprüche

1. Vorrichtung zum Widerstands-Punktschweißen, mit einem Paar von Elektroden, die auf derselben Schweißfläche einer zu schweißenden Anordnung angeordnet sind, wobei
die zu schweißende Anordnung eine Symmetrieachse (6) aufweist, das Paar von Elektroden symmetrisch auf zwei Seiten der Symmetrieachse (6) angeordnet ist, ein Ende jeder Elektrode mit einer speziell geformten Kontaktfläche (20) versehen ist und jede speziell geformte Kontaktfläche (20) in einer Richtung weg von der Symmetrieachse (6) relativ zu einer Elektrodenachse (11) verschoben ist;
wobei die Elektrode einen Elektrodenkopf (2) und einen Elektrodenstab (1) aufweist, ein Ende des Elektrodenkopfs (2) lösbar auf ein Ende des Elektrodenstabs (1) aufgesteckt ist, ein anderes Ende des Elektrodenkopfs (1) mit einem Vorsprung versehen ist und eine Endfläche des Vorsprungs mit der speziell geformten Kontaktfläche (20) versehen ist;
**dadurch gekennzeichnet, dass**:
die speziell geformte Kontaktfläche (20) zum Verschieben einer Stromdichte-Mittellinie (21), die durch das Paar von Elektroden erzeugt wird, in einer Richtung weg von der Symmetrieachse (6) relativ zur Elektrodenachse (11) und/oder zum Ablenken einer Stromdichte jeder Elektrode in einer Richtung weg von der Schweißfläche innerhalb der zu schweißenden Anordnung verwendet wird;
die speziell geformte Kontaktfläche (20) eine erste Kontaktfläche (201) und eine zweite Kontaktfläche (202) aufweist, wobei sich ein geometrischer Mittelpunkt der ersten Kontaktfläche (201) auf einer Seite der Elektrodenachse (11) distal zur Symmetrieachse (6) befindet, die zweite Kontaktfläche (202) mit einer Seite der ersten Kontaktfläche (201) proximal zur Symmetrieachse (6) verbunden ist, und ein Bereich der ersten Kontaktfläche (201) größer ist als ein Bereich der zweiten Kontaktfläche (202).

2. Vorrichtung nach Anspruch 1, wobei die erste Kontaktfläche (201) und die zweite Kontaktfläche (202)j eweils auf zwei Seiten der Elektrodenachse (11) angeordnet sind, die erste Kontaktfläche (201) auf einer Seite distal zur Symmetrieachse (6) liegt und die zweite Kontaktfläche (202) auf einer Seite proximal zur Symmetrieachse (11) liegt.

3. Vorrichtung nach Anspruch 1, wobei ein Führungsteil (25) auf einer Seite des Vorsprungs proximal zur Symmetrieachse (11) angeordnet ist und das Führungsteil (25) zwischen der speziell geformten Kontaktfläche (20) und einer Außenwand des Elektrodenkopfs (2) verbunden ist; und das Führungsteil (25) relativ zur Elektrodenachse (11) geneigt ist und dazu verwendet wird, die Stromdichte-Mittellinie (21) so zu führen, dass sie zu einer Seite distal zur Symmetrieachse (6) relativ zur Elektrodenachse (11) abgewichen oder geneigt ist.

4. Vorrichtung nach Anspruch 1, wobei ein Ende des Elektrodenkopfs (2) mit einem axial angeordneten Passloch (24) versehen ist und ein Ende des Elektrodenstabs (1) mit einem koaxial in das Passloch (24) eingesetzten Verbindungsteil (13) versehen ist.

5. Vorrichtung nach Anspruch 4, wobei eine Seitenwand des Passlochs (24) mit einer Gleitnut (22) versehen ist, eine Seitenwand des Verbindungsteils (13) mit einem Gleitblock (15) versehen ist, der gleitend in die Gleitnut (22) eingepasst ist, und die Gleitnut (22) und der Gleitblock (15) beide entlang der Elektrodenachse (11) vorgesehen sind.

6. Vorrichtung nach Anspruch 4, wobei eine Endfläche des Passlochs (24) mit einer Positionierungsnut (23) versehen ist und ein Ende des Verbindungsteils (13) mit einem Positionierungsvorsprung (14) versehen ist, der koaxial in die Positionierungsnut (23) eingepasst ist; und ein anderes Ende des Verbindungsteils (13) mit einem Stabkörper (12) verbunden ist.

7. Vorrichtung nach einem der Ansprüche 1 bis 6, die ferner eine Bodenplatte (3) und eine Abstandsplatte (5) aufweist, wobei die zu schweißende Anordnung eine obere Schweißplatte (41) und eine untere Schweißplatte (42) aufweist und die obere Schweißplatte (41) und die untere Schweißplatte (42) zwischen der Abstandsplatte (5) und der Bodenplatte (3) angeordnet sind; und eine Oberfläche der Abstandsplatte (5), die von der oberen Schweißplatte (41) abgewandt ist, die Schweißfläche ist.

8. Verfahren zum Widerstandspunktschweißen, wobei das Verfahren **gekennzeichnet ist durch**: Durchführen des Widerstandspunktschweißens mit der Vorrichtung zum Widerstandspunktschweißen nach einem der Ansprüche 1 bis 7, und umfassend:
Antreiben des Paars von Elektroden zum parallelen Bewegen entlang einer Symmetrieachse (6) einer zu schweißenden Anordnung auf einer Schweißfläche der zu schweißenden Anordnung, um das Paar von Elektroden dazu zu bringen, synchron auf die zu schweißende Anordnung zu wirken und Nuggets (7) innerhalb der zu schweißenden Anordnung zu erzeugen, die speziell geformten Kontaktflächen (20) des Paars von Elektroden entsprechen;
wobei ein Paar von Nuggets (7) symmetrisch relativ zur Symmetrieachse (6) vorgesehen ist und/oder für jedes Nugget (7) eine Querschnittsfläche des Nuggets in einer unteren Schweißplatte (42) der zu schweißenden Anordnung größer ist als die Querschnittsfläche des Nuggets in einer oberen Schweißplatte (41) der zu schweißenden Anordnung.

## Revendications

1. Dispositif de soudage par points par résistance, comprenant une paire d'électrodes disposées sur une même surface de soudage d'un ensemble à souder,
l'ensemble à souder présente un axe de symétrie (6), la paire d'électrodes sont agencées symétriquement sur deux côtés de l'axe de symétrie (6), une extrémité de chaque électrode est dotée d'une surface de contact de forme spéciale (20), et chaque surface de contact de forme spéciale (20) est décalée dans une direction s'éloignant de l'axe de symétrie (6) par rapport à un axe d'électrode (11) ;
dans lequel l'électrode inclut une pointe d'électrode (2) et une tige d'électrode (1), une extrémité de la pointe d'électrode (2) est manchonnée de manière détachable sur une extrémité de la tige d'électrode (1), une autre extrémité de la pointe d'électrode (1) est dotée d'un bossage, et une surface d'extrémité du bossage est dotée de la surface de contact de forme spéciale (20) ;
**caractérisé en ce que** :
la surface de contact de forme spéciale (20) est utilisée pour décaler une ligne médiane de densité de courant (21) générée par la paire d'électrodes dans une direction s'éloignant de l'axe de symétrie (6) par rapport à l'axe d'électrode (11), et/ou pour dévier une densité de courant de chaque électrode dans une direction s'éloignant de la surface de soudage à l'intérieur de l'ensemble à souder ;
la surface de contact de forme spéciale (20) comprend une première surface de contact (201) et une seconde surface de contact (202), dans lequel un centre géométrique de la première surface de contact (201) est situé sur un côté de l'axe d'électrode (11) distal par rapport à l'axe de symétrie (6), la seconde surface de contact (202) est reliée à un côté de la première surface de contact (201) proximal par rapport à l'axe de symétrie (6), et une aire de la première surface de contact (201) est plus grande qu'une aire de la seconde surface de contact (202).

2. Dispositif selon la revendication 1, dans lequel la première surface de contact (201) et la seconde surface de contact (202) sont agencées respectivement sur deux côtés de l'axe d'électrode (11), la première surface de contact (201) est située sur un côté distal par rapport à l'axe de symétrie (6), et la seconde surface de contact (202) est située sur un côté proximal par rapport à l'axe de symétrie (11).

3. Dispositif selon la revendication 1, dans lequel une partie de guidage (25) est agencée sur un côté du bossage proximal par rapport à l'axe de symétrie (11), et la partie de guidage (25) est montée entre la surface de contact de forme spéciale (20) et une paroi extérieure de la pointe d'électrode (2) ; et la partie de guidage (25) est inclinée par rapport à l'axe d'électrode (11), et est utilisée pour guider la ligne médiane de densité de courant (21) pour qu'elle soit déviée ou s'incline vers un côté distal par rapport à l'axe de symétrie (6) par rapport à l'axe d'électrode (11).

4. Dispositif selon la revendication 1, dans lequel une extrémité de la pointe d'électrode (2) est dotée d'un trou de montage (24) agencé axialement, et une extrémité de la tige d'électrode (1) est dotée d'une partie de connexion (13) insérée coaxialement dans le trou de montage (24).

5. Dispositif selon la revendication 4, dans lequel une paroi latérale du trou de montage (24) est dotée d'une rainure de coulissement (22), une paroi latérale de la partie de connexion (13) est dotée d'un bloc coulissant (15) monté de manière coulissante dans la rainure de coulissement (22), et la rainure de coulissement (22) et le bloc coulissant (15) sont tous deux disposés le long de l'axe d'électrode (11).

6. Dispositif selon la revendication 4, dans lequel une surface d'extrémité du trou de montage (24) est dotée d'une rainure de positionnement (23), et une extrémité de la partie de connexion (13) est dotée d'un bossage de positionnement (14) ménagé coaxialement dans la rainure de positionnement (23) ; et une autre extrémité de la partie de connexion (13) est connectée à un corps de tige (12).

7. Dispositif selon l'une quelconque des revendications 1 à 6, comprenant en outre une plaque inférieure (3) et une plaque d'espacement (5), l'ensemble à souder inclut une plaque de soudage supérieure (41) et une plaque de soudage inférieure (42), et la plaque de soudage supérieure (41) et la plaque de soudage inférieure (42) sont disposées entre la plaque d'espacement (5) et la plaque inférieure (3) ; et une surface de la plaque d'espacement (5) adossée à la plaque de soudage supérieure (41) est la surface de soudage.

8. Procédé de soudage par points par résistance, le procédé étant **caractérisé par** :
la réalisation du soudage par points par résistance avec le dispositif de soudage par points par résistance selon l'une quelconque des revendications 1 à 7, et comprenant :
la commande de la paire d'électrodes pour qu'elles se déplacent en parallèle le long d'un axe de symétrie (6) d'un ensemble à souder sur une surface de soudage de l'ensemble à souder, pour amener la paire d'électrodes à agir sur l'ensemble à souder de manière synchrone, et générer des noyaux de soudure (7) correspondant à des surfaces de contact de forme spéciale (20) de la paire d'électrodes dans l'ensemble à souder ;
dans lequel une paire de noyaux de soudure (7) sont agencés symétriquement par rapport à l'axe de symétrie (6), et/ou, pour chaque noyau de soudure(7), une aire de section transversale de noyau de soudure dans une plaque de soudage inférieure (42) de l'ensemble à souder est plus grande que l'aire de section transversale de noyau de soudure dans une plaque de soudage supérieure (41) de l'ensemble à souder.
